# EUROPEAN PATENT APPLICATION

(11) **EP 0 745 767 A2**
(43) Date of publication of application: **04.12.1996**
(21) Application number: 96108664.2
(22) Date of filing: 30.05.1996
(51) Int. Cl.: F02M 69/04, F02M 69/46

(54) **A multiple-cylinder internal combustion engine of a fuel injection type and method of injecting fuel**

(30) Priority: 30.05.1995 JP 155352/95
(71) Applicant: YAMAHA HATSUDOKI KABUSHIKI KAISHA, Iwata-shi Shizuoka-ken, 438 (JP)
(72) Inventor: Kometani, Shunichi, Iwata-shi, Shizuoka-ken, 438 (JP); Tamura, Osamu, Iwata-shi, Shizuoka-ken, 438 (JP)
(74) Representative: Grünecker, Kinkeldey, Stockmair & Schwanhäusser Anwaltssozietät

(57) **Abstract**

A multiple-cylinder internal combustion engine of a fuel injection type has at least one fuel injector associated to a side wall of each cylinder body while the longitudinal axes of at least two cylinders define a common plane and a fuel supply device is provided which comprises a fuel distribution pipe which is substantially parallel to the common plane. This provides a very compact arrangement of the fuel supply system as a whole and simplifies the fuel supply passage around cylinders. The injectors are each directly connected to the fuel distribution pipe.

## Description

The present invention relates to a multiple-cylinder internal combustion engine of a fuel injection type wherein each cylinder comprises a combustion chamber formed by a cylinder head, a cylinder body and a piston, and a fuel supply device for supplying fuel to fuel injectors is provided for.

Multiple-cylinder internal combustion engines of this type are known from the prior art. In prior art engines the cylinder body is provided with a scavenging port and an exhaust port while the cylinder head is provided with an ignition plug. Moreover, the cylinder side wall is provided with an injector from which fuel is injected into the combustion chamber.

Such engines comprise various components such as intake and exhaust systems disposed around the cylinders. When each cylinder side wall is to be provided with an injector, it is difficult to avoid interference between the injectors and the fuel supply systems for supplying fuel to the engine and moreover to provide a compact arrangement. A simplification of the fuel supply route to the injectors is especially required for the compact arrangement and also from the view point of smooth fuel supply.

The object of the present invention is to provide a multiple-cylinder internal combustion engine of the fuel injection type as defined in the opening paragraph, in which a fuel supply system as a whole is made compact when each cylinder is provided with an injector and has a simplified fuel supply passage around the cylinders.

The technical problem is solved by a multiple-cylinder internal combustion engine as defined above wherein at least one fuel injector is associated to a side wall of each cylinder body, the longitudinal axis of at least two cylinders defining a common plane and the fuel supply device comprises a fuel distribution pipe which is arranged substantially parallel to the common plane.

Thus, the fuel supply passage is simplified by disposing the centres of in-line cylinders, preferably the outmost cylinders, in a common plane and by disposing a fuel supply pipe of the fuel supply device for supplying fuel to the engine substantially parallel, preferably parallel to the common plane. By this interference between the injectors, the fuel supply system and the intake and exhaust systems disposed around the cylinders can be avoided and be arranged more compactly. This will also lead to a simplification of the fuel supply route and to a more compact size of the whole fuel supply system. It should be noted that all injectors branch-off from the same fuel supply pipe.

According to a preferred embodiment of the invention the injectors are each directly connected to the fuel distribution pipe. In other words, there is no additional element between the distribution pipe and the injectors. Thus, individual pipes between the fuel supply pipe and each injector is not needed. As a result the fuel supply passage is even more simplified and fuel can be supplied smoothly because of the short length of the fuel supply passage.

According to another embodiment at least two injectors are provided for each cylinder while the injectors are directly connected to the fuel distribution pipe. In addition to the simplification of the fuel supply passage this provides a higher flexibility regarding the injection of fuel into the combustion chamber, in order to provide a more elaborate control of the burning of the mixture in the combustion chamber.

Further advantageous embodiments of the invention are contained in the subclaims.

Preferred embodiments of the invention will be described hereinafter in conjunction with the drawings wherein:
Fig. 1 shows schematically an embodiment of a multiple cylinders fuel injection internal combustion engine in an outboard motor, mainly showing one cylinder.
Fig. 2 is a flow chart for fuel and air for the cylinder side wall injection.
Fig. 3 shows a vertical cross section of an upper part of one cylinder of a multiple cylinders fuel injection internal combustion engine.
Fig. 4 shows a horizontal cross section of a multiple cylinders fuel injection internal combustion engine.
Fig. 5 shows a cross section of an exhaust system.
Fig. 6 is a plan view of a multiple cylinders fuel injection internal combustion engine.

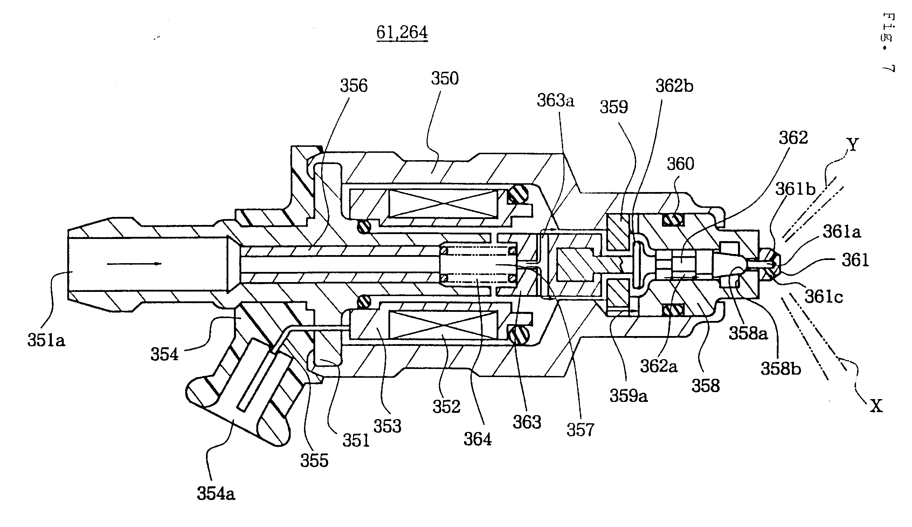

Fig. 7 shows a cross section of an injector.
Fig. 8 shows a cross section of the tip portion of an injector.

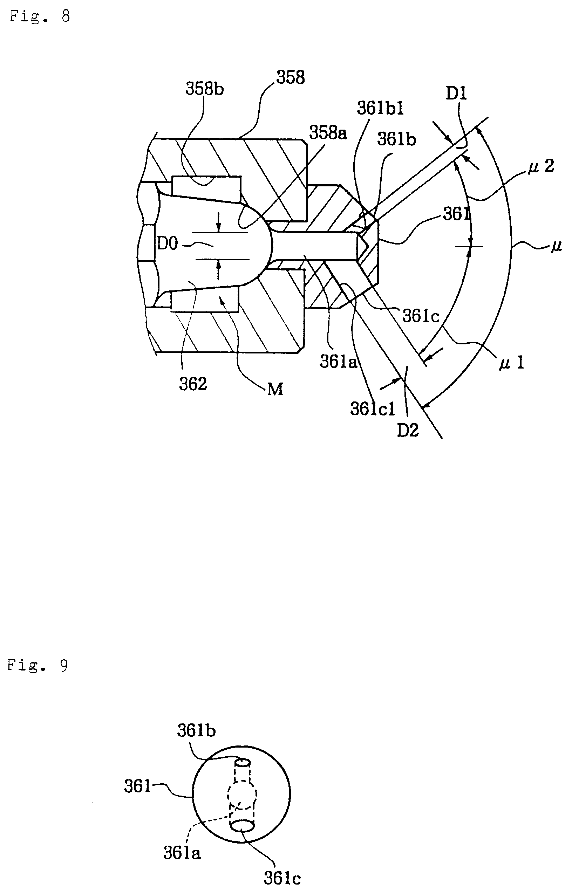

Fig. 9 is a front view of a nozzle of the injector.
Fig. 10 is a timing chart of a fuel injection.
FIG. 11 shows a schematic cross section of fuel injection from the injector.
FIG. 12 is a schematic plan view of the downward directed fuel injection, with the upward directed fuel injection omitted.
FIG. 13 shows a schematic configuration of an embodiment in which a multiple cylinder internal combustion engine of a fuel injection type is mounted on a motorcycle.
FIG. 14 shows a vertical cross section of a multiple cylinder internal combustion engine of a fuel injection type.
FIG. 15 is a view from behind a multiple cylinder internal combustion engine of a fuel injection type.
FIG. 16 is an air and fuel flow chart of a cylinder side wall injection.
FIG. 17 shows a cross section of an embodiment in which one injector is mounted on each cylinder of a multiple cylinder internal combustion engine of a fuel injection type.
FIG. 18 shows a cross section of another embodiment in which one injector is mounted on each cylinder of a multiple cylinder internal combustion engine of a fuel injection type.
FIG. 19 shows a cross section of another embodiment in which one injector is mounted on each cylinder of a multiple cylinder internal combustion engine of a fuel injection type.
FIG. 20 shows a cross section of another embodiment in which one injector is mounted on each cylinder of a multiple cylinder internal combustion engine of a fuel injection type.
FIG. 21 shows a cross section of an embodiment in which two injectors are mounted on each cylinder of a multiple cylinder internal combustion engine of a fuel injection type.
FIG. 22 is a schematic perspective view of an embodiment in which two injectors are mounted on each cylinder of a multiple cylinder internal combustion engine of a fuel injection type.
FIG. 23 shows a cross section of another embodiment in which two injectors are mounted on each cylinder of a multiple cylinder internal combustion engine of a fuel injection type.
FIG. 24 is a schematic perspective view of an embodiment in which two injectors are mounted on each cylinder of a multiple cylinder internal combustion engine of a fuel injection type.
FIG. 25 shows an embodiment in a four cycle engine with a cross section for a cylinder.
FIG. 26 shows an embodiment in a four cycle engine with a plan view of the engine.

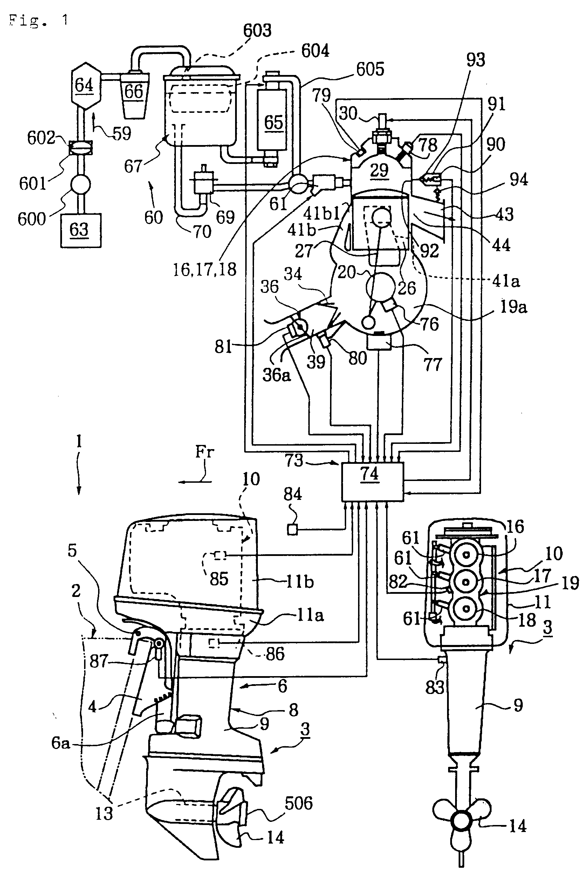

FIG. 1 shows a vessel (1) as a vehicle with the arrow (Fr) showing the direction of advancing. The words right and left used later herein mean the directions as seen in the advancing direction described above. The vessel (1) has a hull (2) with its stern mounted with a detachable outboard motor (3). The outboard motor (3) comprises a bracket (4) mounted on the stern, and an outboard motor proper (6) pivoted with a pivot shaft (5) (arranged in the direction normal to the Fr direction) relative to the bracket (4). The outboard motor proper (6) is provided with a power transmission device (8) which in turn comprises a transmission case (9) constituting the outer shell of the power transmission device (8) and a transmission mechanism housed in the transmission case (9). The transmission case (9) is pivoted for swinging about a vertical pivot shaft (not shown) provided generally vertically on a swivel bracket (6a) which constituted the outboard motor proper (6) pivoted with the pivot shaft (5) relative to the bracket (4). The outboard motor proper (6) is also provided with a two cycle engine (10) of a fuel injection type.

The engine (10) is detachably mounted on the top end of the transmission case (9) with its under side covered with a cover (11a) and its upper side covered with a cover (11b) which can be opened and closed as required. The transmission case (9) extends downward into the water. At the lower end of the transmission case (9) is supported a shaft (not shown) extending horizontally and a propeller (14) is mounted on the shaft. The propeller (14) is connected through the transmission mechanism of the power transmission device (8) for interlocked movement with the engine (10). An exhaust passage (13) sends exhaust gas to the propeller (14).

The engine (10) comprises three cylinders; the first cylinder (16) the second cylinder (17), and the third cylinder (18), stacked one over another. The cylinders (16, 17, 18) of the engine (10) has a common crankcase (19) and a cylinder body (22). A crankshaft (20) with its axis generally vertically directed is housed in the area where the crankcase (19) and the cylinder body (22) are joined together, and supported for free rotation about its axis relative to the crankcase (19) and the cylinder body (22). Cylinder bodies (22) of the cylinders (16, 17, 18) are attached to the rear of the crankcase (9) to form a single unit. Projecting ends of the cylinder bodies (22) are respectively provided with detachable cylinder heads (23). The cylinder bodies (22) are joined together to constitute a cylinder block (24), and the cylinder heads (23) are also joined together.

Each of the cylinder bodies (22) has a cylinder bore (25) into which a piston (26) is inserted for free sliding back and forth. Each piston (269 is connected through a connecting rod (27) to the crankshaft (20). The space surrounded with the cylinder head (23) and the piston (26) in the cylinder bore (25) corresponds to the "cylinder inside" which becomes a combustion chamber (29) when the piston (26) approaches the cylinder tread (23) to a certain extent. Each of the cylinder heads (23) is provided with an ignition plug (30), corresponding to each combustion chamber (29), with its discharging portion (31) facing the combustion chamber (29). For each cylinder, a crank chamber (19a) is formed with the cylinder block (24) and the crankcase (19).

On the front side of the crankcase (19) are formed three intake ports (33) each connected to each crank chamber (19a) and each provided with a reed valve (34). In front of the reed valve (34) are connected an intake manifold (35), a throttle body (36) housing a throttle valve (36a), and an intake silencer (37) in succession in that order. The top end of the intake silencer (37) is provided with an inlet duct (38) opening to the rear so as to take in air from a cowling opening (510). The inlet duct (38), intake silencer (37), throttle body (36), intake manifold (35), and reed valve (34) are connected to each other through intake passages (39) formed respectively in those components. The intake passages (39) are connected to the intake port (33). Throttle levers (36b) provided respectively on the throttle bodies (36) are connected together with interlocking means (40) so that the throttle valves (36a) are interlocked to perform opening and closing movements together with the throttle levers (36b) when an operating mechanism is operated by an operator.

Each cylinder body (22) around the cylinder bore (25) is provided with a scavenging passage (41). The scavenging passage (41) is constituted with two main scavenging passages (41a) each having a scavenging port (41a1) opening to the cylinder bore (25) and a sub-scavenging passage (41b) having a scavenging port (41b1). The scavenging ports (41a1) are located at opposing positions, and an exhaust port (41b1) of the exhaust pasage (41b) is located to oppose an exhaust port (44). These exhaust passages (41) make internal connections between the crankcase (19) and the combustion chamber (29).

To the left side of the cylinder block (24) is attached an exhaust manifold (42). One end of a first exhaust passage (43) in the exhaust manifold (42) is branched into three parts each opening through each exhaust port (44) to each combustion chamber (29). An exhaust guide (46) is interposed between the cylinder block (24) and the transmission case (9). A second exhaust passage (47) of the exhaust guide (46) is connected to the other end of the first exhaust passage (43). A third exhaust passage (48) is formed in the transmission case (9). One end of the third exhaust passage (48) is connected to the second exhaust passage (47) and the other end of the third exhaust passage (48) is a cylindrical exhaust passage (13) connected to air exhaust passage in the propeller (14). The end of the exhaust passage is open as a discharge port (506) into the water.

The engine (10) is provided with a cooling device (50) of a water-cooled type. The cooling device (50) comprises a first water cooling jacket (51) formed for the cylinder head (23) and the cylinder block (24), a second cooling water jacket (52) formed for the exhaust manifold (42), a third cooling water jacket (53) formed for the exhaust guide (46) so as to surround the second exhaust passage (47), and a fourth cooling water jacket (54) formed for the transmission case (9) so as to surround the third exhaust passage (48), and those cooling water jackets (51 - 54) are connected to each other either directly or through a plurality of cooling water connection passages (55). The lower end of the fourth cooling water jacket (54) is connected to the downstream side of the third exhaust passage (48).

A water pump is provided for supplying cooling water (56) such as sea water to the first cooling water jacket (51). The cooling water (56) passes through: the outer portion (51a), surrounding the exhaust manifold, of the first cooling water jacket (51); the second cooling water jacket (52); the outer portion (51b), surrounding the upper part of the cylinder, in the the first cooling water jacket (51); the cylinder head portion (51c) in the the first cooling water jacket (51), the cooling water jackets (53, 54), and the downstream end of the third exhaust passage (48), and discharged into the water. As the cooling water flows, the first through third cylinders (16, 17, 18) are cooled.

The engine (10) is provided with a fuel supply device (60) for supplying fuel (59). The fuel supply device (60) has three injectors (61) detachably attached to the cylinder side walls (22a) of the cylinder bodies (22) corresponding to the first through third cylinders (16, 17, 18). The injectors (61) inject fuel (59) appropriately from the cylinder wall sides (22a) into the combustion chambers (29). Each injector (61) is provided with a first fuel pump (64) and a second fuel pump (65) in series. The first fuel pump (64) is operated by pressure pulsation in the crankcase (19a) to draw fuel (59) in a fuel tank (63) in the hull (2), and sends the fuel (59) to a vapor separator (67) which is a fuel storage (small tank) in the outboard motor (3). The second fuel pump (65) pressurizes and supplies fuel (59) at the vapor separator (67).

A primary primp (600) is interposed between the fuel tank (63) and the first fuel pump (64). The primary pump (600) and the first fuel pump (64) are interconnected through a hose side connector (601) and a cowling side connector (602). The primary pump (600) is for manually supplying fuel before starting.

A fuel filter (66) and the vapor separator (67) are interposed in series between the first fuel pump (64) and the second fuel pump (65). In the vapor separator (67) are provided a needle valve (603) and a float (604). When the level of fuel (59) in the vapor separator (67) lowers and the float (604) lowers to a certain level or below, the needle valve (603) opens to supply fuel (59) from the fuel tank (63) side. The second fuel pump (65) supplies fuel (59) through a fuel supply pipe (605) to each injector (61). The fuel supply pipe (605) is provided with a pressure regulator (69) for use in the adjustment of the pressure of fuel (59) supplied to the injector (61). Fuel not injected is returned through a fuel passage (70) to the vapor separator (67) located on the upstream side of the second fuel pump (65). Tiny bubbles of fuel vapor or air mixed in the fuel are separated with the vapor separator (67).

Each injector (61) is of an electromagnetic type, and when it is energized (or de-energized), fuel (59) is injected into the combustion chamber (29) for that period. Or the components of the fuel supply device (60), those from the fuel tank (63) to the hose side connector (601) are located in the hull (2), and others constitute the outboard motor (3).

FIG. 1 shows an engine control device (73) for controlling the engine (10). The engine control device (73) is provided with an electronic control unit (74) and connected electrically to ignition plugs (30) functioning as actuators, the injectors (61), and the second fuel pump (65). A flywheel magneto (75) is attached to the top end of the crankshaft (20) for supplying electric power to the control unit (74) directly or through a battery.

Various sensors for detecting the operating state of the engine (10) are provided and electrically connected to the control unit (74). Such sensors are; a crank angle sensor (76) for detecting a reference crank angle and rotation angle of the crankshaft (20), crankcase inside pressure sensor (77) for detecting the pressure inside the crankcase (19), a cylinder inside pressure sensor (78) for detecting the pressure inside one of the cylinders (16 - 18), a knocking sensor (79) for detecting the state in the cylinders (16 - 18), an intake air temperature sensor (80) for detecting the temperature in the intake passage (39), and a throttle opening sensor (81) for detecting the degree of opening of a throttle body (36). An intake pressure sensor may be also provided for detecting the pressure of the intake passage (39)

There are also provided; a cylinder temperature sensor (82) for detecting the temperature of one cylinder body (22), a back pressure sensor for detecting the pressure on the upstream side in the third exhaust passage (48), an atmospheric pressure sensor (84) for detecting the atmospheric pressure, a cooling water temperature sensor (85) for detecting the temperature of cooling water (56); a shift sensor (86) for detecting forward, neutral, and reverse shifting operations and shifted states of the power transmission device (8); and a trim angle sensor (87) for detecting up and down rotated positions of the outboard motor (3) about the pivot shaft (5).

Each of the cylinders (16 - 18) is also provided with an O₂ sensor (90) disposed in a sensor holding chamber (91). When the pistion (26) moves down and passes a relief valve hole (92) in the cylinder side wall (22a), a relief valve (93) is opened by exhaust gas pressure, and exhaust gas enters the sensor holding chamber (91). The O₂ sensor (90) detects the concentration of O₂ in exhaust gas, and according to the detected value, calculates air to fuel ratio in the combustion chamber (29). The exhaust gas in the sensor holding chamber (91) passes through a check valve (94) and is exhausted to the first exhaust passage (43). The engine (10) is also provided with a starter (95) and an oil tank (96).

During operation of the engine (10), when the pistons (26) in the first through third cylinders (16 - 18) move in succession from the bottom dead center on the crankshaft (20) side toward the combustion chamber (29), the pistons (26) cover in succession the scavenging ports (41a1) and (41b1) of the scavenging passage (41) and the exhaust port (44) of the first exhaust passage (43). When the piston (26) moves toward the combustion chamber (29) as described above, the pressure in the crank chamber (19a) in the crankcase (19) becomes negative. Then, the pressures on the reed valve (34), the intake passage (39) in the intake port (33), intake manifold (35), throttle body (36), and the intake silencer (37) become negative in succession. As a result, external air (97) is drawn from the intake port (33) into the intake passage (39) and into the crank chamber (19a) in the crankcase (19). This process is the "intake stroke."

When the piston (26) further moves toward the combustion chamber (29) after the scavenging ports (41a1) and (41b1) of the scavenging passage (41) and the exhaust port (44) of the first exhaust passage (43) are covered, the mixture already taken in the combustion chamber (29) is compressed. This process is the "compression stroke."

Immediately before the piston (26) reaches the top dead center, the mixture is ignited with an electric discharge of the discharging portion (31) of the ignition plug (30) controlled with the engine control device (73), burns and expands to push back the piston (26) toward the crankshaft (20) when the piston goes beyond the top dead center. This process is the "combustion stroke."

As the piston (26) moves toward the crankshaft (20), thee air taken into the crank chamber (19a) of the crankcase (19) is pre-compressed. By the way, the reed valve (34) is closed by the pressure prevailing at this time. In the middle of the movement of the piston (26) toward the crankshaft (20), first the exhaust port (44) is uncovered. Then, burned product of the mixture or exhaust gas (100) is discharged through the exhaust port (44). This process is the "exhaust stroke."

The exhaust gas (100) is exhausted through the first exhaust passage (43), second exhaust passage (47), third exhaust passage (48), and exhaust passage (13) into the water. In this case, the cooling water (56) after cooling the cylinders (16 - 18) runs through the fourth cooling water jacket (54) and the cooling water connecting passage (55) and is exhausted together with the exhaust gas (100) into the water described above.

As the piston (26) moves toward the crankshaft (20) and the exhaust port (44) is uncovered, next, the scavenging port (41) is opened. Then, the air taken in and pre-compressed as described above is made to flow through the scavenging passage (41) into the combustion chamber (29). This intake air pushes out part of the burned gas remaining in the combustion chamber (29) to the first exhaust passage (43). This process is the "scavenging stroke." Since the scavenging stroke begins in the middle of the exhaust stroke, and the exhaust stroke is over in the middle of the scavenging stroke, the two strokes are also called collectively as the scavenging exhaust stroke. After that, the piston (26) returns to the bottom dead center. Fuel is injected from the injector (61) during the period from the middle of the scavenging stroke to the early period of the compression stroke.

In this case, part of the air which has flowed through the scavenging passage (41) into the combustion chamber (29) blows out to the first exhaust passage (43) side, mixes with burned gas and exhausted as the exhaust gas (100). On the other hand, the rest of the burned gas which has not been exhausted mixes with fresh intake. From that state, the piston (26) moves again toward the combustion chamber (29) side, aid the steps described above are repeated so that the crankshaft (20) is rotated. By the way, the injection is carried out after the blow out is stopped. Through the crankshaft (20), the engine outputs a power to rotate the propeller (14) through the power transmission device (8) and drive forward the vessel (1) as an object to be driven. Tie first, second, and third cylinders (16), (17), and (18) work in that order with a phase difference of a crank angle of 120°.

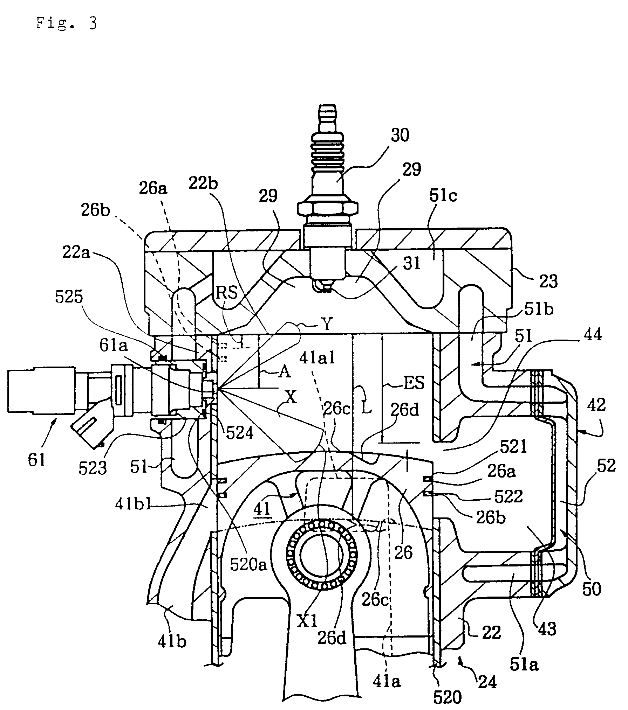

In FIG. 3, the piston (26) is arranged for sliding in a sleeve (520) and formed with a first ring groove (26a) and a second ring groove (26b) over and under respectively, and with a first piston ring (521) and a second piston ring (522) respectively fit therein. The cylinder side wall (22a) is provided the injector (61) through a cap (523). The front and rear sides of the cap (523) are sealed with seal members (524) and (525), respectively. The tip portion (61a) of the injector (61) is mounted to face an opening (520a) of the sleeve (520) and the mounting position is determined as described below. The injectors 61 extend through said cooling water jacket 51.

Since the injector (61) is distant from the cylinder head (23), not only that its temperature is less likely to rise but it is constantly cooled with the engine cooling water in the cooling water jacket (51) from outer circumference of the cap (523). Therefore, vapor is less likely to be produced in the injector (61) and the injection flow described below is less likely to be stopped by carbon deposits.

When it is assumed that; the distance between the top end (22b) of the cylinder and the mounting position of the injector is (A), the distance between the top end (22b) of the cylinder and the piston top circumference when the piston is at the bottom dead center is (L), and the distance between the top end (22b) of the cylinder and the lower end of the first ring groove (26a) in which the first piston ring (521) is fit is (RS), a relationship holds as RS < A < 0.3L.

Also, when it is assumed that the distance between the top end (22b) of the cylinder and the exhaust port (44) is ES, a relationship holds as 0.35ES < A < 0.65ES.

By mounting the injector (61) to a specified position as described above, a longer zone in which injection is possible may be secured in comparison with the conventional arrangement while lowering heat load on the injector by the piston (26) at an early period of the combustion stroke.

Two, upper and lower fuel injections are made from the injector (61), with the downward directed injection flow (X) directed to the piston head (26c) which is moving up from the bottom dead center to the top dead center, and with the upward directed injection flow (Y) directed to the ignition plug (30). While the downward directed injection flow (X) cools the piston head (26c), evaporation of the fuel itself is accelerated. However, if there is only the downward directed injection flow (X), mixture near the ascending piston head (26c) becomes rich while mixture in the upper portion of the combustion chamber (29) becomes lean. The upward directed injection flow (Y) functions to make mixture in the entire combustion chamber (29) as uniform as possible and to make combustion smooth.

At the time of starting or when the load is low, the piston temperature is low, the throttle valve opening is small and the gas flow in the cylinder is less active. Therefore, mixture cannot be made uniform across the entire combustion chamber (29) with only one of the injection flows (X) and (Y). However, since mixture is made uniform by the two injection flows (X) and (Y), smoother combustion is possible.

Furthermore, since combustible mixture is securely formed by the upward directed injection flow around the ignition plug (30) at the time starting, ease of starting is improved.

By the way, the flow velocities of the injection flows (X) and (Y) are made 10 - 30 m/s.

The injector (61) is located nearer to the cylinder head (23) than to the sub-scavenging port (41b1). The downward directed injection flow (X) is directed to the exhaust port (44) or the piston head (26c) and securely strikes the piston head (26c) after the exhaust port (44) is covered with the piston (26), and heat exchange occurs at the piston head (26c).

Injection start timing is set so that the exhaust port (44) is covered before the tip or the downward directed injection flow (X) reaches the exhaust port (44). The tip of the downward directed injection flow (X) is shown as (X1). In the case all the downward directed injection flow (X) is made to strike the piston head (26c), the injection start timing is set so that the exhaust port (44) is covered before the tip of rebounded injection flow reaches the exhaust port (44).

As described above, the injector (61) is located according to this invention nearer to the cylinder head (23) than according to the conventional arrangement. As a result, the injection flow travels a longer distance. During the travel, fuel exchanges heat with heated atmosphere in the combustion chamber also before reaching the piston head (26c).

As shown in FIG. 1, three cylinders (16 - 18) are disposed in line, with the centers (O2) of the cylinders (16 - 18) disposed in a common plane (P20). A fuel supply pipe or a fuel distribution pipe (530) to the injectors (61) is disposed generally parallel to the plane (P20). Each injector (61) parallel to each other is mounted at the same position of each of the cylinders (16 - 18). Thus, the fuel supply passage is simplified.

The length of the distribution pipe (530a) from the fuel distribution pipe (530) to each injector (61) is shortened. Also in the case cylinder centers (O2) of any two of the cylinders (16 - 18) are disposed in the common plane (P20) and the fuel distribution pipe (530) is disposed parallel to the plane (P20), the injectors (61) mounted on the two cylinders may be disposed parallel to each other. Even when the injectors (61) are disposed not parallel to each other, simplification of the fuel passage is still possible.

Simplification of the fuel passage is also possible by arranging the fuel distribution pipe (530) nearer to the cylinder, disposing the injectors (61) on the cylinder side walls (22a) of the cylinders (16 - 18), with each injector (61) connected to the fuel supply pipe or the fuel distribution pipe (530), thereby making piping between the fuel supply pipe or the fuel distribution pipe (530) and the injectors (61) unnecessary.

Alternatively, the lower is located the cylinder, the lower (nearer to the crank chamber) may be disposed the injector (61). Since the thermal load on the injector is greater as the cylinder is located lower, it is arranged to cover the injector (61) for a longer period of time with the piston (26). At least for the uppermost cylinder (16), the injector (61) is disposed to meet the conditions RS < A < 0.3L and 0.35ES < A < 0.65ES. in this case, the fuel distribution pipe (530) may be bent in a plane parallel to the common plane passing the cylinder centers (O2) described above, or tilted relative to the vertical line.

Since the direction of the line connecting the sub-scavenging port (41b1) to the exhaust port (44) is tilted and the injectors (61) are tilted, the cylinder pitch (P) may be reduced while avoiding interference between main scavenging ports of adjacent cylinders.

Next, the structure of the injector for use in embodiments of FIGs. 1 1 will be described. FIG. 1 is a cross-sectional view of the injector. FIG. 1 is a cross-sectional view of the front end of the injector.

The injector (61, 264) has an injector housing (350). A cap body (351) is fit on the rear and of the injector housing (350). A core (353) with a coil (352) is disposed in the injector housing (350). The cap body (351) is covered with a resin-made cap (354). A connector (354a) of the cap (354) is provided with a lead wire (355) connected to the core (353). The lead wire (355) is connected through the connector (354a) to a drive power source side. A pipe (356) is inserted into the cap body (351). Fuel supplied from a fuel inlet (351a) of the cap body (351) is led through the pipe (356) into a fuel chamber (357) in the injector housing (350).

A needle housing (358) is fit in the front end of the injector housing (350) with a needle stopper (359) interposed in between, and sealed with a seal member (360). A nozzle (361) is fit in the front end of the needle housing (358) and formed with an injection passage (361a). An upward directed injection hole (361b) and a downward directed injection hole (361c) are formed and connected to the injection passage (361a).

The diameter (D1) of the upward directed injection hole (361b) and the diameter (D2) of the downward directed injection hole (361c) are determined to be smaller than the diameter (D0) of the injection passage (361a). The diameter (D2) of the downward directed injection hole (361c) is determined to be greater than the diameter (D1) of the upward directed injection hole (361b). As a result, more amount of fuel is injected from the downward directed injection hole (361c) than from the upward directed injection hole (361b).

A needle (362) is movably disposed in the needle housing (358). A movable piece (363) is fixed to the needle (362). The needle (362) is formed with a fuel passage (362a) by cutting. The needle stopper (359) is formed with a fuel passage (359a) by cutting. The movable piece (363) is also formed with a fuel passage (363a). A compression spring (364) is interposed between the cap body (351) and the movable piece (363) to force the needle (362) through the movable piece (363) in the direction to close a valve seat (358a) of the needle housing (358) so that an injection passage (361a) is closed and fuel cannot be injected. When a coil (352) on a core (353) is energized, the movable piece (363) is attracted against the compression spring force by electromagnetic force caused with the coil (352) to open the valve seat and the injection passage (361a), and inject fuel. At this time, a stopper flange (362b) formed on the needle (362) comes in contact with the needle stopper (359) to restrict the position of the needle (362).

Since the pressure on the injector 61 is adjusted with an adjustment valve at 600 - 650 kilopascal, when the needle (362) presses the valve seat (358a), the fuel pressure in the fuel storage (358b) in the needle housing (358) is also 600 - 650 kilopascal. The farther is the needle (362) from the valve seat (358a), the greater becomes the flow velocity through the injector (61, 264), and the pressure in the fuel storage (358b) lowers. Since the fuel pressure further lowers as the fuel flows from the fuel storage (358b) through the space between the needle (362) and the valve seat (358a), the fuel pressure in the injection passage (361a) is about a half of that in the fuel storage (358b).

Fuel is injected to the combustion chamber (29, 248) at the flow velocity based on the differential pressure between the injection passage (361a) and the combustion chamber (29). The pressure losses in various parts and pressure adjustment valve are set so that the flow velocity at this time is 10 - 30 m/s, preferably about 20 m/s.

Thus, the injection valve (M) is disposed upstream of the injection holes (361b, 361c) of the injector (61). In the state of the injector (61) mounted on the cylinder side wall (22a), the angle (µ) between the injection hole walls (361b1, 361c1) on both ends in the longitudinal direction of the cylinder is determined to be not less than 45 degrees. It is constituted that the extension line of one of the injection hole walls (361b1, 361c1) which is remote from the cylinder head intersects the piston head (26c) at least when the fuel injection from the injector (61) is over. In this embodiment, the angle (µ) is determined to be about 100 degrees. The angle (µ1) of the injection hole wall (361c1) relative to the center line of the injection passage (361a) of the injection valve (M) is determined to be greater than the angle (µ2) of the injection hole wall (361b1) relative to the center line of the injection passage (361a). In this embodiment, the angle (µ2) and (µ1) are determined to be 55 degrees and 45 degrees, respectively.

As described above, since the extension line of one of the injection hole walls (361b1, 361c1) which is remote from the cylinder head intersects the piston head (26c) at least when the fuel injection from the injector (61) is over, during the injection period, at least part of the injection flow strikes the piston head (26c) and exchange heat with the piston head (26c). Furthermore, since the injector (61) is mounted on the cylinder slide wall (22a) so that the angle between the injection hole walls (361b1, 361c1) on both ends in the longitudinal direction of the cylinder is not less, than 45 degrees, fuel is injected to spaces within the combustion chamber (29) except for the piston head (26c), fuel-air mixture is formed in the entire combustion chamber (29), combustion is stabilized, performance is improved, and the revolution is stabilized.

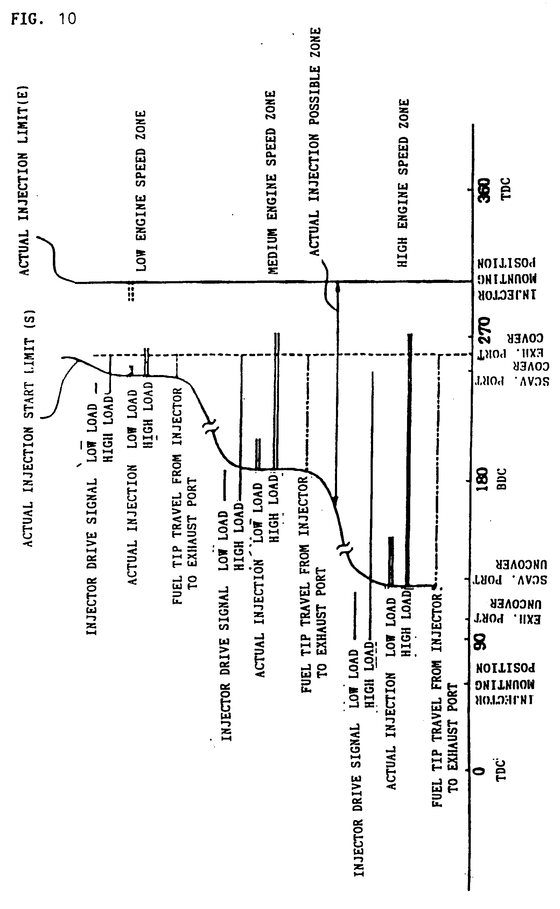

Next, the fuel injection timing of the injector will be described. FIG. 10 is a fuel injection timing chart.

### (0061)

In this fuel injection timing chart, the horizontal axis indicates the crank angles corresponding to the opening and closing of the exhaust port, opening and closing of the scavenging port, and the injector attachment position. The vertical axis indicates the engine speed as the low, medium, and high engine speed zones.

The injector drive signals are indicated with solid lines, with the upper line showing the signal for the low load while the lower line for the high load. The actual fuel injection from the injector is shown with a double line, with the upper line for the low load and the lower line for the high load. The duration for the injected fuel travelling from the injector to the exhaust port is shown with a dash-and-double-dotted line. There is an actuation delay between the injector drive signal and actual actuation of the injector.

The fuel injection timing of the injector varies with the engine speed zones. The actual injection start limit is shown with the curve (S) and the actual injection limit is shown with the straight line (E). The actual available injection range is set with the actual injection start limit curve (S) and the actual injection limit line (E).

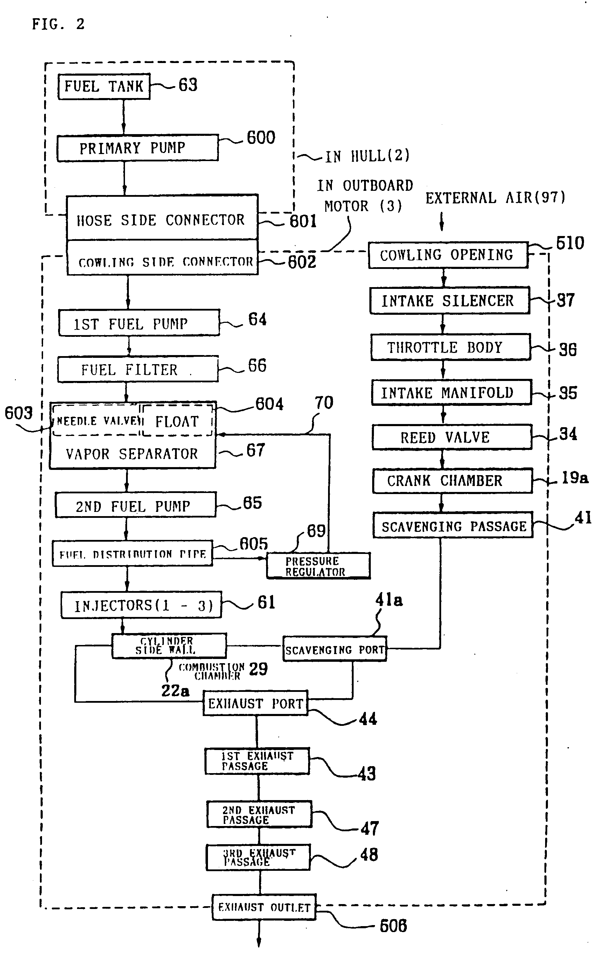

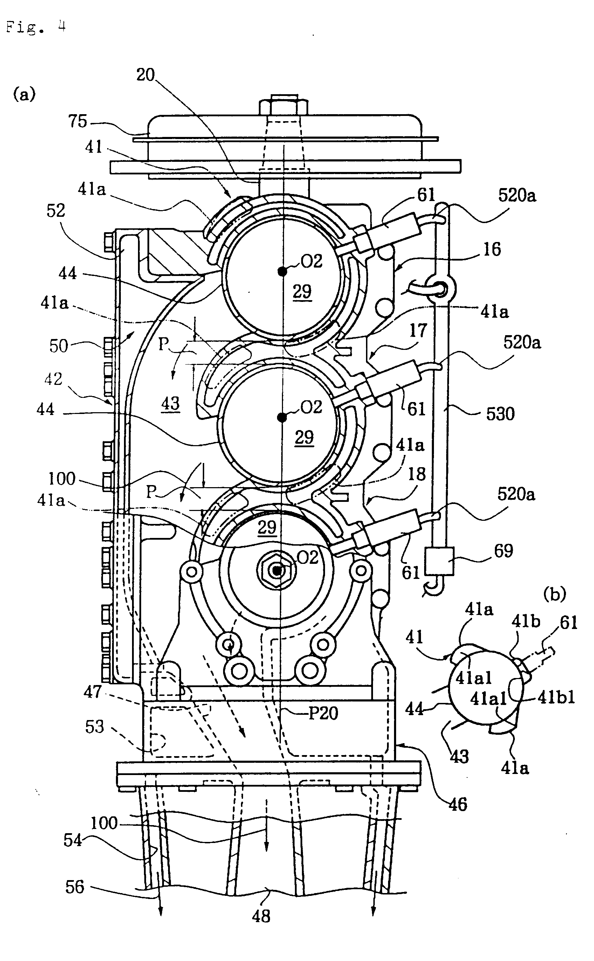

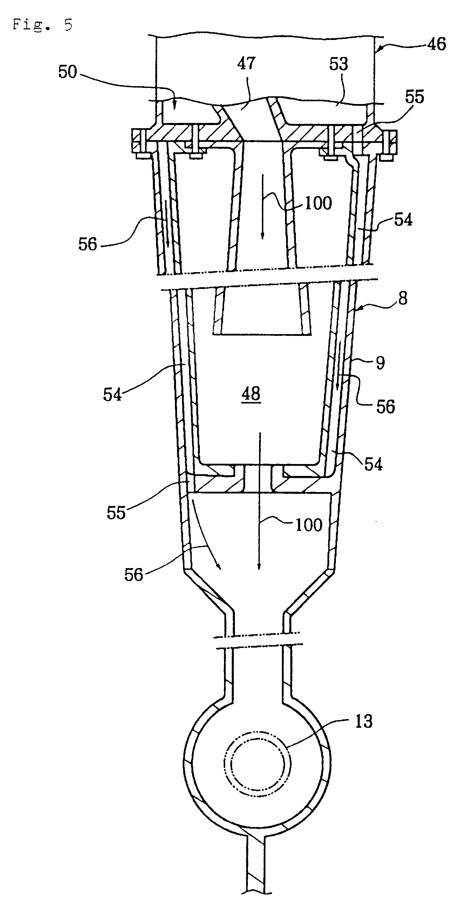

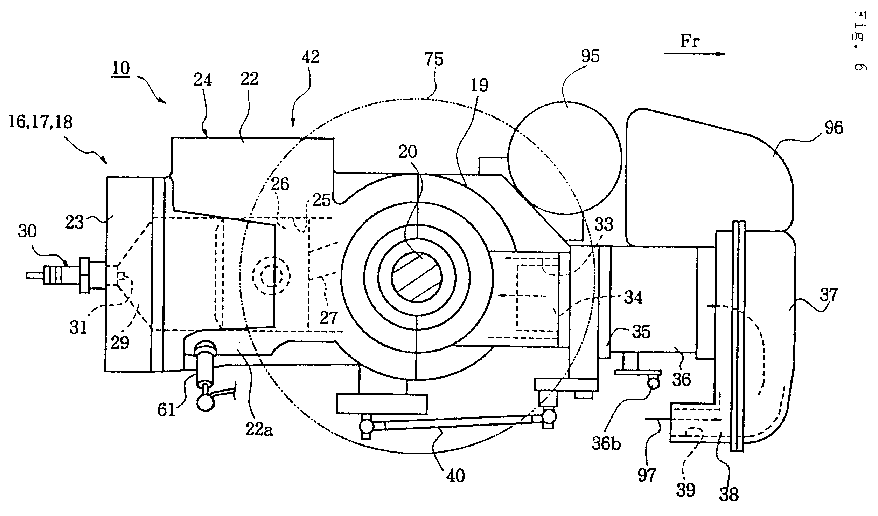

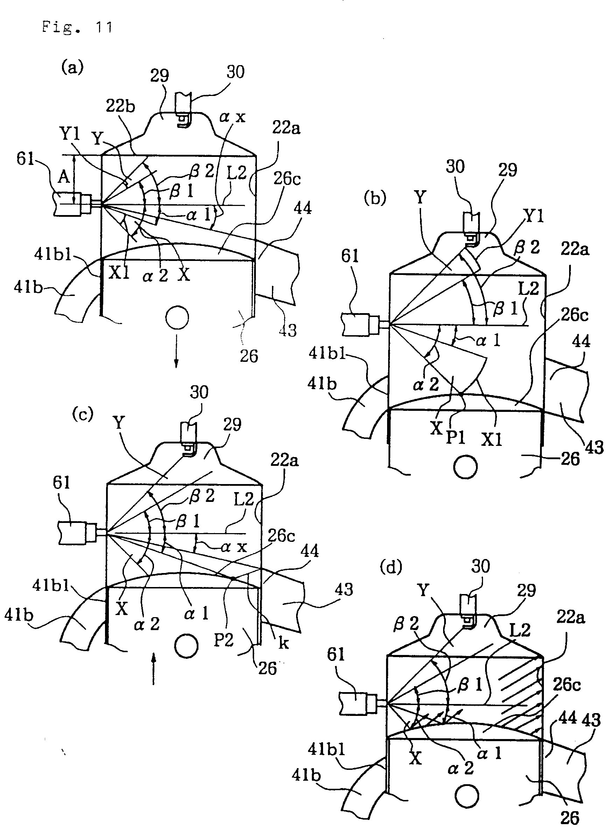

Next, the fuel injection with the embodiment injector shown in FIGs. 1 through 6 will be described in reference to FIGs. 11.

FIG. 11 shows a schematic cross section of fuel injection with an injector.

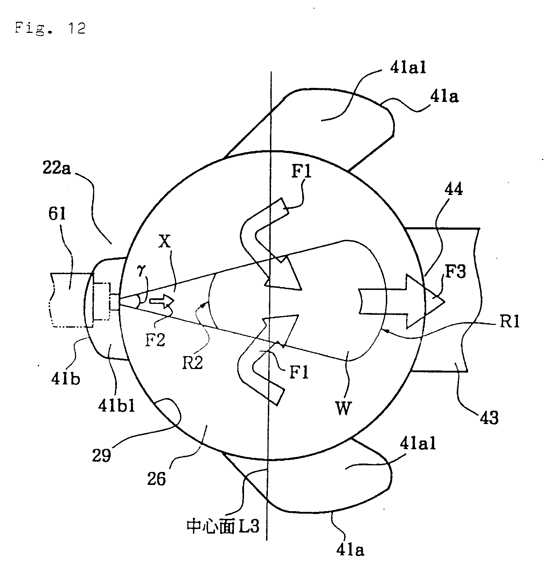

FIG. 12 is a schematic plan view to show the downward directed injection flow from the injector, omitting the upward directed injection flow.

The mounting conditions of the injector (61) are shown with the embodiment shows in FIGs. 1 though 6. The structure of the injector (61) is shown in FIGs. 11 and 12, but not limited to it.

Referring to FIG. 11, the angles of the downward directed injection flow (X) from the injector (61) are indicated with (α1) and (α2) relative to the horizontal line (L2) (with the embodiment shown in FIGs. 1 through 6, the line (L2) becomes vertical) and the angles (α1) and (α2) are determined to be greater than the angle (αx) of the line extending between the injector hole of the injector (61) and the upper edge of the exhaust port relative to the horizontal line (L2).

The angles of the upward directed injection flow (Y) are indicated with (β1) and (β2) relative to the horizontal plane (11). The front end surface of the downward directed injection flow (X) is indicated as (X1) and the front end surface of the upward directed

In the state shown in FIG. 11(a), fuel injection from the injector (61) is started at a high speed while the piston (26) is descending from the top dead center toward the bottom dead center.

The front end surface (X1) of the injection flow (X) is directed to the descending piston head (26c). In the state shown in FIG. 11(b), the piston after reaching the bottom dead center has changed its moving direction and is ascending when the front end surface (X1) reaches and strikes the piston bead (26c) at the point (P11). After that, injection flow of angles smaller than (α2) reaches and strikes the piston head (26c) and changes its direction in succession.

In the state shown in FIG. 11(c), part of the injection flow (X), at the uppermost boundary angle (α1) strikes the piston head (26c) while the piston (26) is ascending toward the top dead center. The travel distance of part of the injection flow (X) at the uppermost boundary angle (α1) from the point (P21) to the cylinder side wall (22a) in the reflecting direction is (k). In the state shown in FIG. 11(d), the exhaust port (44) is covered before the earliest of part of the injection flow which has reached and struck the piston head (26c) reaches the cylinder side wall (22a) or the exhaust port (44).

The injection start timing and the fuel injection angles (α1) and (α2) are set according to the piston speed (crank radius, engine speed), the distance (A) from the cylinder top end (22b) to the injector mounting position and the injection flow velocity, so that the exhaust port (44) is covered with the piston (26) whenever the injection flow (X) reaches the cylinder side wall (22a) on the opposite side.

When the piston (26) is descending at high speeds, the fuel injection is started while the exhaust port (44) is still open. The lower becomes the speed, the more delayed is the fuel injection start. Therefore, no blowby of the front end of the injection flow (X) into the exhaust port (44) occurs.

The slower is made the injection flow velocity, the earlier may be made the injection start. In this embodiment, the velocity of the injection flow (X) is set to 10 m/s - 30 m/s.

Furthermore, if the injection start timing is delayed, injection flow velocity is reduced, or the cylinder bore is increased, the fuel injection angle (α1) may be further reduced. For instance, the fuel injection angle (α1) may be set to 0° namely horizontal.

Since the upward directed injection flow (Y) is directed to the discharging portion (31) of the ignition plug (30), if the fuel injection timing is delayed at low speeds, ignition is made before thick mixture produced in two locations, around the piston (26) and the piston head (26c), is diffused. There is a thin mixture between the piston circumference and the piston head. Thus, a slow combustion is possible in which fire surface advances slowly like a stratified combustion. As a result, stability is improved. By not directing to the piston (26) circumference but upward only, thick mixture may be produced sufficiently in both upper and lower parts of the combustion chamber (29). As a result, pre-mixing is carried out securely through the diffusion of mixture by remaining swirl after scavenging at medium and high speeds.

As shown in FIG. 12, the injector (61) is disposed on the half of the cylinder side wall (22a) opposite the exhaust port (44). That is to say, the injector (61) is disposed on the same side as the sub-scavenging port (41b1) of the center plane (L3). As shown in FIG. , the injector (61) is provided with the upward directed injection hole (361b) and the downward directed injection hole (361c) located up and down in symmetric positions to an intake passage (361a). The upward directed injection hole (361b) and the downward directed injection hole (361c) have circular cross sections, with the downward directed injection hole (361c) having a larger diameter than that of the upward directed injection hole (361b). As a result, fuel amount of the injection flow (X) directed to the piston head (26c) is greater than that of the injection flow (Y) directed upward of the injector (61). Therefore, combustion heat stagnates on the piston head (26c) and makes the piston head (26c) a hot spot where vaporization of fuel of the injection flow directed to the piston head (26c) is more securely accelerated.

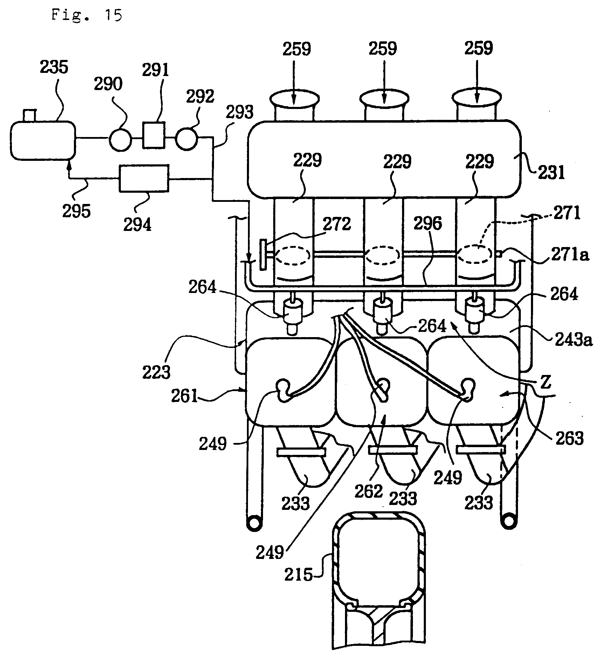

The downward directed injection hole (361c) has a circular cross section. In the plan view of FIG. 15, the angle (γ) of the injection flow (X) is set by |α2 - α1|. The area where the injection flow (X) strikes the piston head (26c) is indicated with (W). All the injection flow (X) directed to the piston head (26c) strikes the piston head (26c) and vaporization of fuel of the injection flow (X) directed to the piston head (26c) is more securely accelerated.

The front end (R1) and rear end (R2) of the striking area (W) move toward the injector (61) as the piston (26) ascends.

FIG. 12 shows an exhaust gas flow (F3), scavenging flows (F1) from the maid scavenging ports (41a1) on both sides which are then turned back toward the exhaust port (44). A scavenging flow (F2) comes from the sub-scavenging port (41b1). Even if the injection flow (X) is disturbed with the main scavenging flows (F1) and the sub-scavenging flow (F2), the time when the injection flow reaches the exhaust port (44) is not made earlier and blowby is prevented.

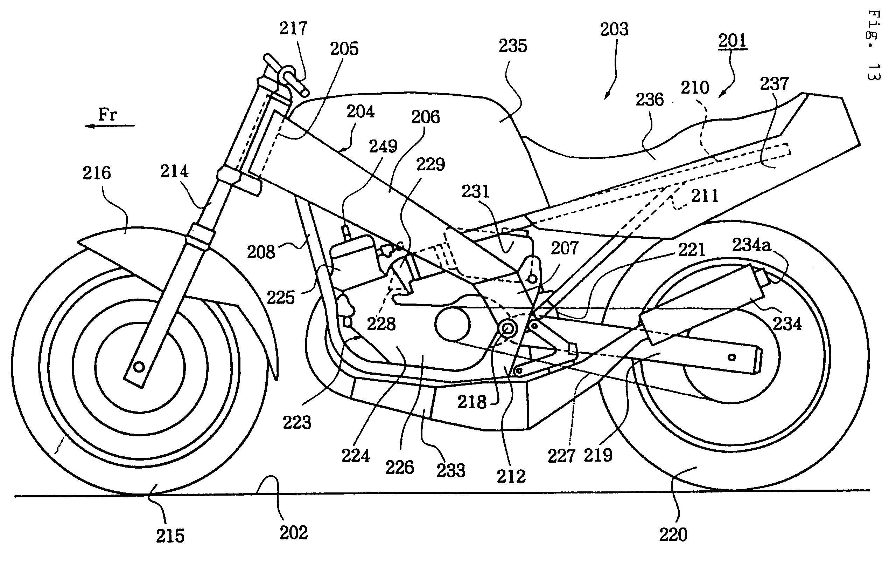

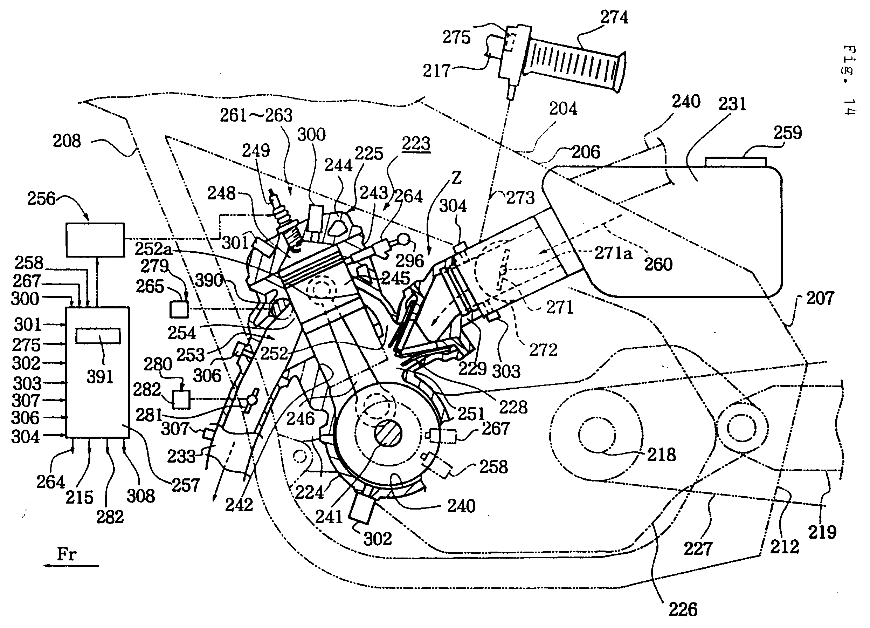

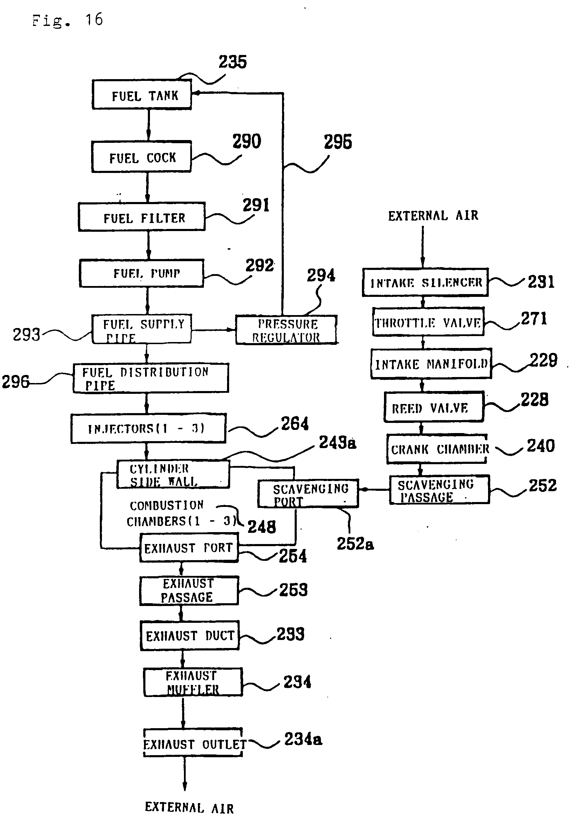

Fig. 13 though 16 show an embodiment of mounting a multiple cylinders fuel injection internal combustion engine on a motorcycle. Fig. 13 shows a shematic configuration of the embodiment of mounting the multiple cylinders fuel injection internal combustion engine on a motorcycle. Fig. 14 shows a vertical cross section of the multiple cylinders fuel injection internal combustion engine. Fig. 16 is a flow chart of fuel and air of cylinder side wall injection.

Those figures show a motorcycle (201) as an example of a riding type vehicle, with the arrow (Fr) showing the advancing direction. The words right and left used later herein mean the directions as seen in the advancing direction described above. The symbol (202) is the ground on which the motorcycle (201) runs. The motorcycle (201) has a chassis (203) having a chassis frame (204). The chassis frame (204) has at its front end a head pipe (205). From the head pipe (205) extend paired right and left main frames (206) obliquely down backward. From each of the main frames (206) extend seat pillar tubes (207). From the front underside of the main frames (206) extend down tubes (208) with their extension ends connected to the extension ends of the seat pillar tubes (207).

From the rear part of the main frames (206) extend rearwardly and upwardly seat rails (210) supported with paired right and left back stays (211) on the seat pillar tubes (207). The area where the back stays (211) join the seat pillar tubes (207) constitutes a rear arm bracket (212). Freely steerable front forks (214) are supported on the head pipe (205). At the lower ends of the front forks (214) is supported a front wheel (215) with a front fender (216) covering the front wheel (215) from above. The front fender (216) is secured to a vertically middle positions on the front forks (214). At the top ends of the front forks (214) are attached handlebars (217).

Rear arms (219) are supported for vertical swinging with a pivot shaft (218) on the rear arm brackets (212). A rear wheel (220) is supported at the swinging ends of the rear arms (219), with dampers (221) interposed between the seat rails (210) and the rear arms (219). A fuel injection internal combustion engine (223) is disposed in a space surrounded with the main frames (206), seat pillar tubes (207), and the down tubes (208), namely within the chassis frame (204). The engine (223) is of a two cycle type comprising a crankcase (224) and cylinders (225) projecting up forward from the crankcase (224), and detachably mounted on the chassis frame (204) by means of tightening means. On the back side of the crankcase (224) is connected a power transmission device (226) on the output side of which is connected the rear wheel (220) through a chain transmission mechanism (227).

To the back side of the cylinders (225) are connected reed valves (228), an intake manifold (229), and an intake silencer (231) in that order. The intake manifold (229) is provided with a throttle valve (271) for controlling the intake amount. A throttle pulley (272) attached to a shaft (271a) of the throttle valve (271) is connected through a throttle wire (273) to a throttle grip (274) so that the throttle valve (271) is opened and closed by the operation of the throttle grip (274). The throttle grip (274) is provided on one of the handlebars (217) and has a throttle opening sensor (275).

To the front side of the cylinders (225) is connected one end of an exhaust tube (233) with its other end extending backward near the underside of the down tubes (208) and connected at its rear end to an exhaust muffler (234). Exhaust gas is exhausted from the outlet (234a) of the exhaust muffler (234).

A fuel tank (235) is supported on the main frame (206). A seat (236) is supported on the seat rails (210). Side covers (237) are provided for covering the rear part of the chassis (203). By the operation of the engine (223), the motorcycle (201) is driven forward on the road (202) as the power of the engine (223) is transmitted to the rear wheel (220) through the power transmission device (226), the chain transmission mechanism (227), etc.

The engine (223) has the first through third cylinders (261 - 263). A crankshaft (241) is housed in a crank chamber (240) in the crankcase (224) and supported for free rotation about its axis. The cylinder (225) of the engine (223) comprises a cylinder body (243) having a cylinder bore (242) with its axis generally vertical, and a cylinder head attached to the projecting end of the cylinder body (243). In the cylinder bore (242) is inserted a piston (245) for free axial sliding and connected through a connecting rod (246) to the crankshaft (241).

The space surrounded with the cylinder head (224) and the piston (245) in the cylinder bore (242) becomes the combustion chamber (248) when the piston (245) approaches the cylinder head (224) to a certain extent. The cylinder head (244) is provided with a spark plug (249) with its discharging portion facing the combustion chamber (248). In the back upper area of the crankcase (224) is formed an intake port (251) connected to a reed valve (228). The cylinder body (243) around the cylinder bore (242) is provided with a scavenging passage (252) making connection between the crank chamber (240) and the combustion chamber (248). Part of the scavenging passage (252) which is open to the combustion chamber (248) is a scavenging port (252a). An exhaust port (254) is formed in the front part of the cylinder body (243) so as to make connection between the combustion chamber (248) and an exhaust passage (253) in the upstream end which is the front end of the exhaust tube (233).

The engine (223) is provided with plural (three) injectors (264) corresponding to the first through third cylinders (261 - 263). The injectors (264) are detachable attached to the cylinder side walls (243a) of the cylinder bodies (243) to inject fuel supplied from the fuel tank (235) from the cylinder side walls (243a) into the combustion chambers (248). Since the structure, mounting position, injection direction, and injection timing of the injectors (264) are the same with those of the previous embodiment, descriptions on them are omitted.

A fuel cock (290) is provided under the fuel tank (235). To the fuel cock (290) are connected a fuel filter (291), a fuel supply pump (292), and a fuel supply pipe (293) in that order. Fuel is supplied from the fuel supply pipe (293) through a fuel distribution pipe (296) to the injectors (264). The fuel distribution pipe (293) is provided with a pressure regulator (294) for regulating the pressure of fuel supplied to the injectors (264) . Surplus fuel is returned through the pressure regulator (294), and a return fuel passage (295). A space (Z) behind the cylinder bodies (243), above the intake manifold (229), and below the fuel tank (235) is utilized to lay out the fuel distribution pipe (296) and the injector (264) compactly while avoiding interference with other components and protecting the fuel distribution pipe (296).

An ignition plug (249) is electrically connected to an electronic ignition circuit (256) connected to an electronic engine control device (257). A crank angle sensor (258) is also provided for detecting the rotation angle of the crankshaft (241) and also connected to the electronic engine control device (257).

During operation of the engine (223), when the piston (245) moves from the bottom dead center on the crankshaft (241) side (shown with phantom lines in FIG. 8) toward the combustion chamber (248), the piston (248) covers in succession the scavenging port (252a) and the exhaust port (254) in that order. When the piston (245) moves toward the combustion chamber (248) as described above, the pressure in the crank chamber (240) becomes negative. Then, the external air (260) is drawn through the intake silencer (231) as an intake air (260).

Next, the intake air (260) flows through the intake manifold (229) and the reed valve (228) and taken into the crank chamber (240). This process is the "intake stroke."

When the piston (245) moves further toward the combustion chamber (248) after the scavenging port (252a) and the exhaust port (254) are covered, mixture formed with fuel already injected with the injector (264) into the combustion chamber (248) and/or fuel injected during this process is compressed. This process is the "compression stroke."

At a required crank angle, namely a required ignition timing, detected with the crank angle sensor (258) immediately before the piston (245) reaches the top dead center, the discharging portion of the ignition plug (249) discharges according to the output signal from the ignition circuit (256) controlled with the engine control device (257). Then, the mixture is ignited and burned, and the burned gas expands. As a result, the piston (245) after passing the top dead center is pushed back toward the crank chamber (240). This process is the "combustion stroke."

As the piston (245) moves toward the crank chamber (240), the air taken into the crank chamber (240) is pre-compressed. At this time, the reed valve (228) is closed by the pressure in the crank chamber (240).

In the middle of the movement of the piston (245) toward the crank chamber (240), first the exhaust port (254) is uncovered. Then, burned product of the mixture or exhaust gas is exhausted from the combustion chamber (248) through the exhaust port (254). This process is the "exhaust stroke." The exhaust gas is exhausted outside through the exhaust passage (253) in the exhaust tube (233).

As the piston (245) moves toward the crank chamber (240), the exhaust port (254) is opened and then the scavenging port (252a) is opened. Then the air pre-compressed in the crank chamber (240) flows through the scavenging passage (252) into the combustion chamber (248) and pushes out part of burned gas remaining in the combustion chamber (278) to the scavenging port (254) and at the same time the combustion chamber (248) is filled with air. This process is the " scavenging stroke." The "scavenging stroke" continues as the piston (245) returns to the bottom dead center, moves up again, and immediately before it covers the exhaust port (252a). Fuel is injected from the injector (264) during the period from the middle of the "scavenging stroke" to the beginning of the "compression stroke" when the piston (245) covers the injector (264).

From the state described above, the piston (245) moves again toward the combustion chamber (248) and the processes are repeated to rotate the crankshaft (241). Through the crankshaft (241) the engine (223) outputs power which is transmitted through the power transmission device (226) and the chain transmission mechanism (227), to the rear wheel (220).

An exhaust timing adjustment device (279) is provided for improving the engine performance by adjusting the exhaust timing when exhaust gas is exhausted from the combustion chamber (248) to the exhaust port (254). The exhaust timing adjustment device (279) has an exhaust timing adjustment valve (390) which opens and closes the upper opening of the exhaust port (254) so that the edge of the upper opening of the exhaust port (254) is variable. The exhaust timing adjustment valve (390) is actuated with an actuator (265) such as a servomotor, etc. which is connected to the engine control device (257).

An engine speed sensor (267) for detecting the revolution of the engine (223) or the crankshaft (241) is connected to the engine control device (257).

When the engine (223) speed is determined by the detection signal of the engine speed sensor (267) to be in the high speed range, the exhaust timing adjustment valve (390) is opened by the operation of the actuator (265) controlled with the engine control device (257), and the upper opening edge of the exhaust port (254) is positioned upward. Thus the exhaust timing is advanced to improve the engine performance in the high speed range.

When the engine (223) speed is determined to be in the middle or low speed range on the other hand, the actuator (265) closes the exhaust timing adjustment valve (390) so that the upper opening edge of the exhaust port (254) is positioned downward. Thus the exhaust timing is delayed to improve the engine performance in the middle or low speed range. While the exhaust timing is delayed at low engine speed, the injection timing may be advanced accordingly and more secure pre-mixture combustion is possible. That is to say.

If the injection start timing is delayed at low speeds according to the decrease in the piston speed so that fuel does not flow out to the exhaust port (254), expansion of fuel is not wide when the injection flow strikes the piston head. However, even if the injection start timing is advanced for the amount corresponding to the lowering of the upper opening edge of the exhaust port (254), fuel does not flow out but injected fuel can strike a wide area on the piston head as a result of the advancement and heat exchange can be improved.

The engine (223) is provided with an exhaust valve opening adjustment device (280) with an exhaust valve (281) for adjusting the opening of the exhaust passage (253) and restricting the flow rate of the exhaust gas flowing through the exhaust passage (253) at low loads or low speeds. The exhaust valve (281) is actuated with an actuator (282) such as a servomotor connected to a control device (391).

The engine (223) is provided with a combustion chamber pressure sensor (300) and a knock sensor (301). The combustion chamber pressure sensor (300) delays the ignition timing when the combustion chamber pressure exceeds a predetermined value. When knocking occurs, the knocking sensor (301) detects vibration and causes to delay the ignition timing and prevents knocking, and when the knocking disappears the ignition timing is returned to the original timing.

The engine (223) is also provided with a crank chamber pressure sensor (302), an intake pipe pressure sensor (303), intake pipe temperature sensor (301), an exhaust pipe pressure sensor (306), and an exhaust pip temperature sensor (307). According to information from those sensors, the engine control device (257) controls the ignition timing, injection timing, injection period, and an oil supply device (308).

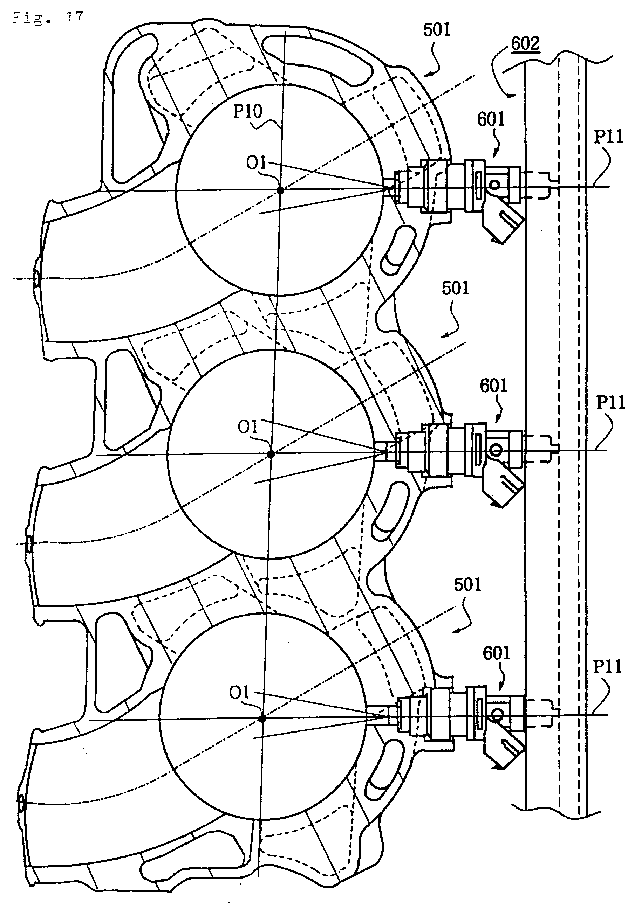

Next, referring to FIGs. 17 through 20, embodiments will be described in detail in which one injector is mounted on each cylinder of a multiple cylinder internal combustion engine of a fuel injection type.

In the embodiments shown in FIGs. 17 through 20, three cylinders (501) are disposed in line, with all the cylinder centers (O1) disposed in a common plane. A fuel distribution pipe (603) or a fuel supply pipe to a fuel supply device (602) for supplying fuel to the injectors is disposed approximately parallel to the common plane. In the embodiment shown in FIG. 17, injectors (601) parallel to each other are disposed in a plane (P11) passing the cylinder center (O1) and perpendicular to a plane (P10) passing cylinder centers (O1) of the three cylinders (501). An upward directed injection flow (Y) and a downward directed injection flow (X) are injected toward the cylinder center (O1) as seen in the drawing.

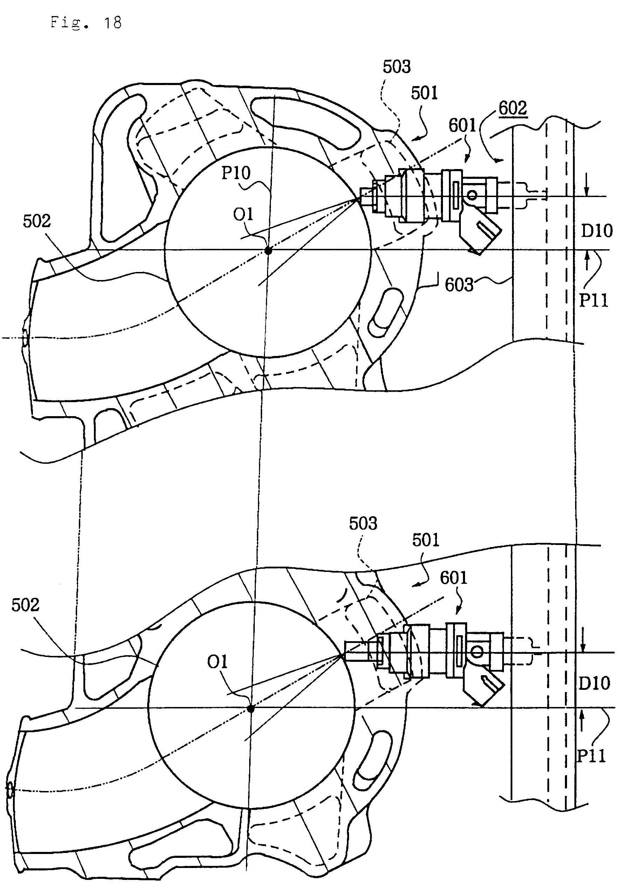

In the embodiment shown in FIG. 18, an injector (601) is translated by a distance of (D1) from the plane (P11) passing the cylinder center (O1) and perpendicular to the plane (P10) passing the cylinder centers of all the cylinders (501) as seen in the plan view, and disposed above a sub-scavenging port (503). Fuel is injected from the injector (601) in upper and lower directions.

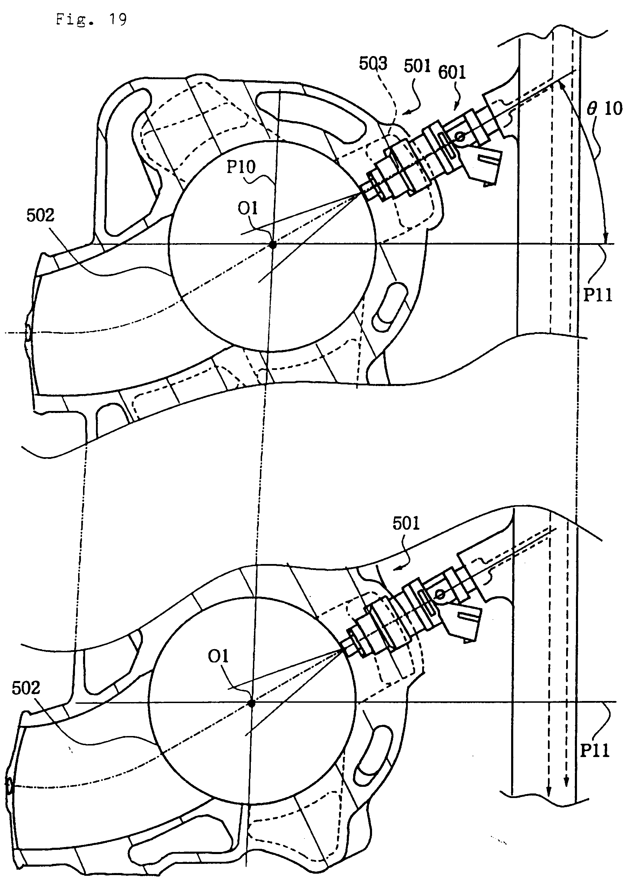

In the embodiment shown in FIG. 19, the injector (601) is tilted by a specified angle of (θ1) relative to the plane (P10) passing the cylinder centers (O1) of all the cylinders (501), and located above the sub-scavenging port (503) so as to inject fuel toward the cylinder center (O1).

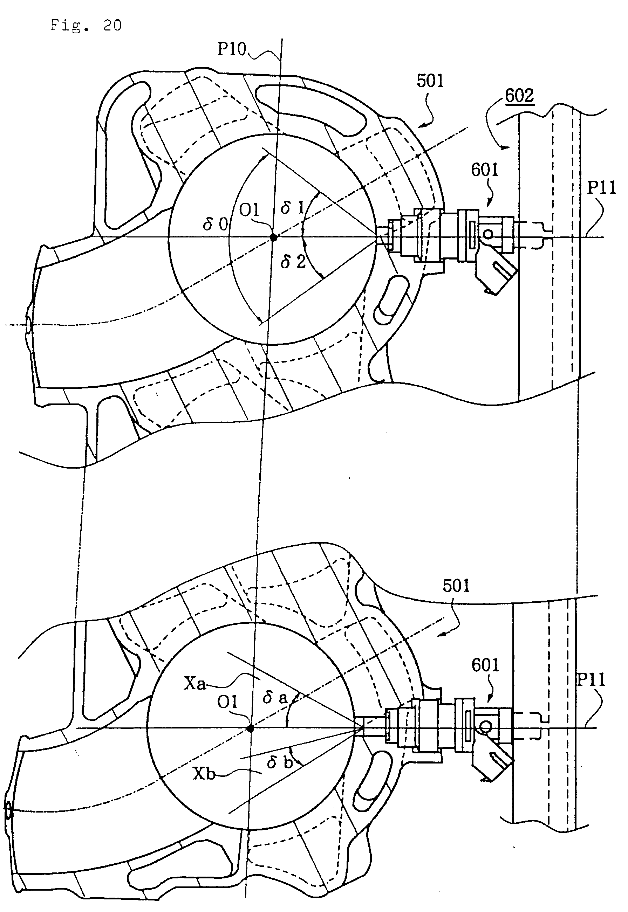

The embodiment shown in FIG. 20 is arranged similarly to the embodiment shown in FIG. 17. However, as shown in the upper half of FIG. 20, the downward directed injection flow (X) from the injector (601) is injected with a vertical widening angle (δ0) displaced upward as a whole (δ2 > δ1). Since the center of Schnure scavenging flow is located above and near the injector (601), upward displacement of the downward directed injection flow (X) as a whole causes a large amount of fuel to be diffused by the scavenging flow to make more uniform mixture in the combustion chamber. The upward directed injection flow (Y) is also directed slightly upward of the cylinder center (O1) where the ignition plug (30, 249) is located.

Alternatively, all the cylinders (501) may be arranged as shown in the lower half of FIG. 20. That is to say, the downward directed injection flow (X) is divided into two parts, with the lower part of the injection flow (X) having a widening angle (δa) greater than a widening angle (δb) of the lower part of the injection flow (X).

In the embodiments shown in FIGs. 18 and 19, since the tip of the injector (601) is approximately on the symmetry center plane of the scavenging flow, an arrangement is possible in which fuel is injected toward the cylinder center (O1) as seen in the drawing by the upward directed injection flow (Y) and downward directed injection flow (X) from the injector (601).

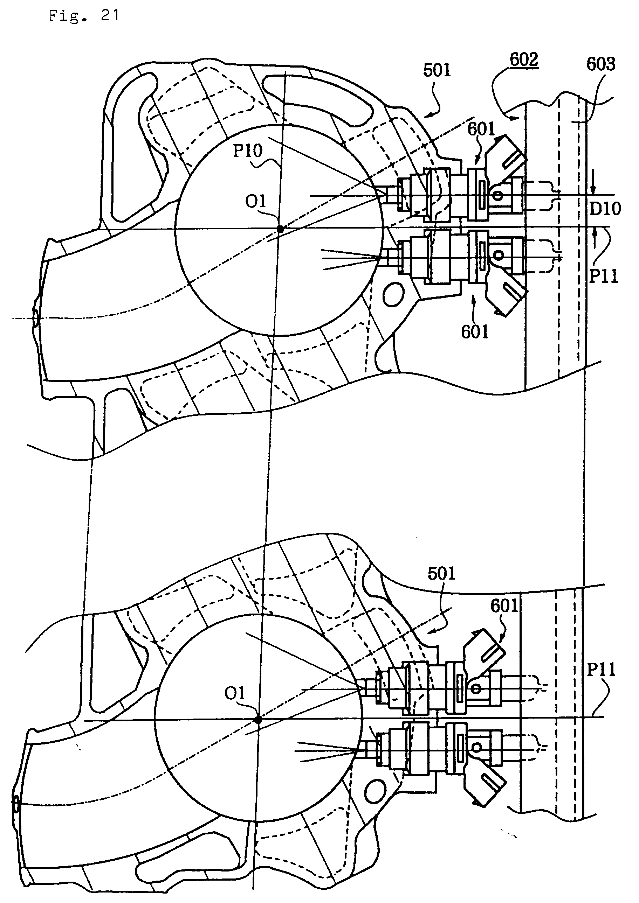

Next, referring to FIGs. 21 through 24, embodiments will be described in detail in which two injectors are mounted on each cylinder of a multiple cylinder internal combustion engine of a fuel injection type. Also in these embodiments, three cylinders (501) are disposed in line, with all the cylinder centers (O1) disposed in a common plane. A fuel distribution pipe (603) or a fuel supply pipe to a fuel supply device (602) for supplying fuel to the injectors (601) is disposed approximately parallel to the common plane.

In the embodiment shown in FIG. 21, two injectors (601) are disposed In symmetric positions in symmetric attitude on both sides of the plane (P11) passing the cylinder center (O1) and perpendicular to the plane (P10) passing the cylinder centers (O1) of all the cylinders (501), and fuel is injected from the two injectors (601). In this embodiment too, the distribution pipes are omitted, and the injectors (601) are directly connected to the fuel distribution pipe (603). Concerning the downward directed injection flow (X) from each injector (601), the injector (601) shown on the upper side in the drawing has a greater widening angle and a greater flow rate than the injector (601) shown on the lower side in the drawing.

The upward directed injection flow (Y) from the lower injector (601) is injected in the direction slightly upward as seen in the drawing of the cylinder center (O1) where the discharging portion (301) is located.

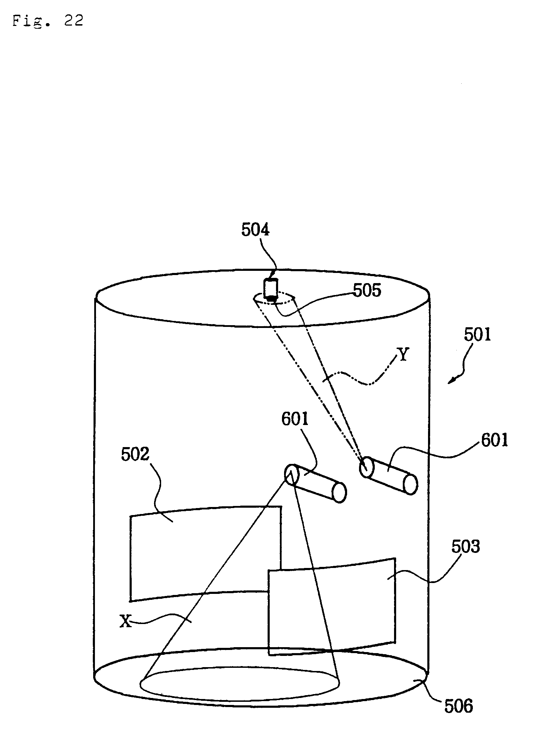

Arrangement of the injectors (601) in the embodiment shown in FIG. 22 is similar to that shown in FIG. 21. However, two injectors (601) inject fuel in different directions. That is to say, one injector (601) shown on the right in the drawing directs the upward directed injection flow (Y) toward the discharging portion (505) of the ignition plug (504), while the other injector (601) on the left directs the downward directed injection flow (X) toward the piston head (506).

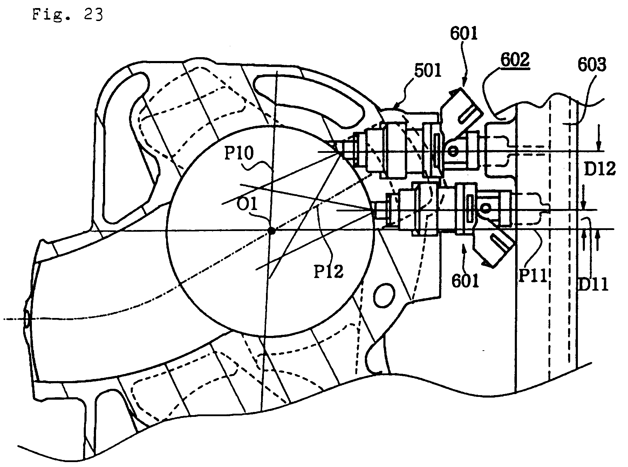

In the embodiment shown in FIG. 23, two injectors (601) are translated by respective distances of (D11) and (D12) from the plane (P11) passing the cylinder center (O1) and perpendicular to the plane (P10) passing cylinder centers (O1) of all the cylinders (501) as seen in the plan view, and located above the sub-scavenging port (503). Fuel is injected from the two injectors (601) toward the exhaust port as seen in the drawing. The plane (P12) passing the center of the sub-scavenging port (503) and the cylinder center (O1) is a center plane of the Schnure scavenging flow. The tips of the two injectors (601) are located at symmetric positions with respect to the plane (P12). Flow rates of the downward directed injection flows (X, X) and the upward directed injection flows (Y, Y) are made equal to each other.

Alternatively, two injectors (601) may be disposed with specified tilt angles relative to the plane (P10) passing the cylinder centers (O1) of all the cylinders (501) so as to be directed to the cylinder center (O1) as seen in the drawing, and located above the sub-scavenging port (503). The two injectors (601) may also be disposed at equal distances from the plane (P12) and parallel to each other.

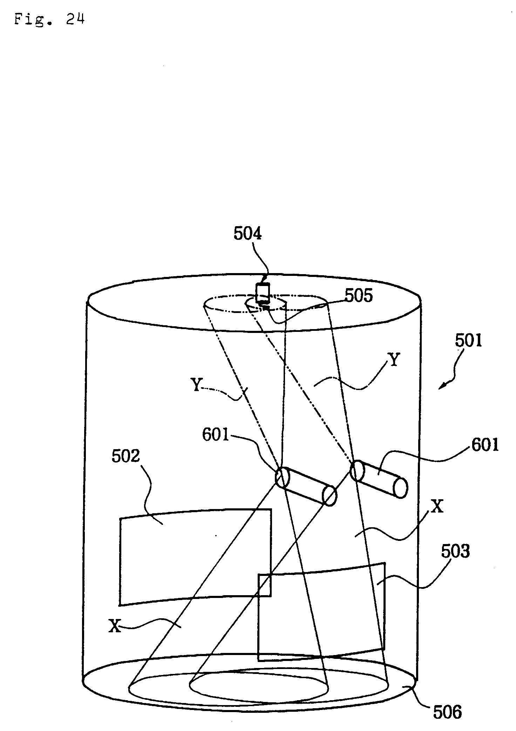

In the embodiment shown in FIG. 24, the upward directed injection flow (Y) is directed to the discharging portion (505) of the ignition plug (504) and the downward directed injection flow (X) is directed to the piston head (506) from each of the two injectors (601).

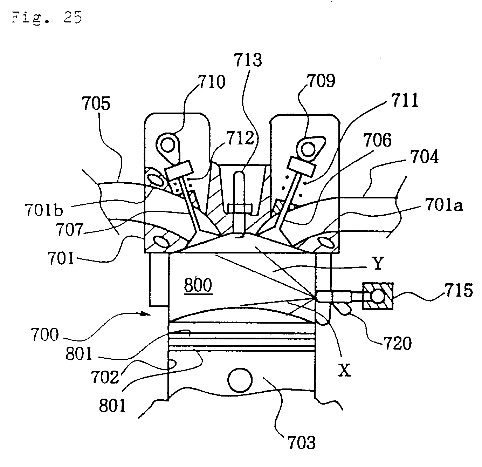

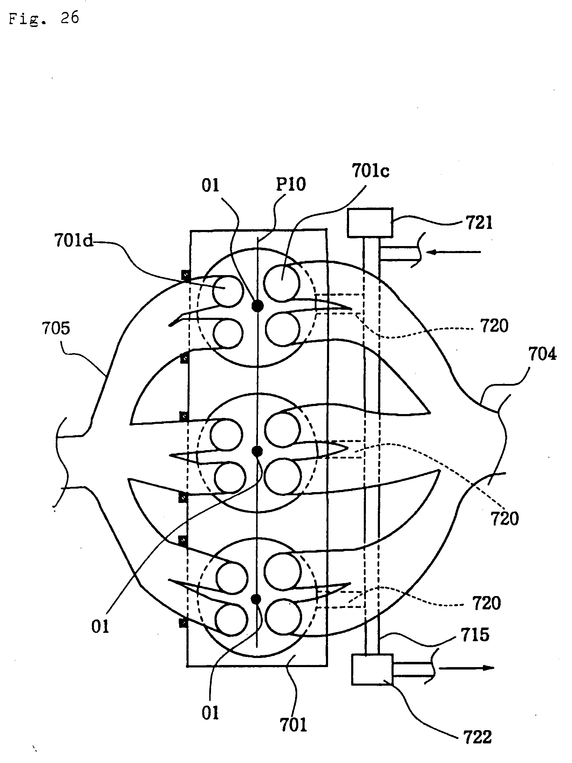

FIGs. 25 and 26 show an embodiment in a four cycle engine. FIG. 25 shows a cross section of a cylinder. FIG. 26 is a plan view of the engine. A cylinder head (701) is placed on a cylinder block (700). A sliding piston (703) is housed in a cylinder (702). The inside of the cylinder (701) is provided with two intake passages (701a) and two exhaust passages (701b). The underside opening ends of the cylinder head (701) are made as an intake port (701c) and an exhaust port (701d). The other opening ends are connected to an intake manifold (704) and an exhaust manifold (705), respectively. Each intake port (701c) is provided with an intake valve (706) opened and closed while resisting a valve spring (711). Each exhaust port (701d) is provided with an exhaust valve (707) opened and closed while resisting a valve spring (712). An ignition plug (713) is disposed in each cylinder center (O1) of the cylinder head (701).

A fuel distribution pipe (715) is disposed parallel to a common plane (P10) which passes respective cylinder centers (O1). Injectors (720) disposed parallel to each other on the side walls of the cylinders (702) are connected directly to the fuel distribution pipe (715). A fuel pressure damper (721) for absorbing fuel pressure variation is disposed on the upstream end of the fuel distribution pipe (715). A pressure regulator valve (722) for keeping the injection pressure constant is disposed on the downstream end of the fuel distribution pipe (715).

Fuel injection from the injector (720) is started after the intake valve (706) is opened and the piston (703) passes the injector (720) mounting point. The upward directed injection flow (Y) is directed toward the area from the exhaust valve (707) to the discharging portion of the ignition plug (713) and the downward directed injection flow (X) is directed toward the head of the piston (703). As a result, the injected fuel exchanges heat with the piston head and the exhaust valve (707) and vaporizes to produce uniform mixture in the combustion chamber (800) before being ignited at a timing when the piston (703) is in the vicinity of the top dead center.

Piston rings (801) fit to the piston (703). The injector (720) is disposed at a position nearer to the crank chamber (not shown) than to the upper piston ring (801) as it is located when the ignition plug (713) ignites so that the injector (720) is protected from high temperature, high pressure combustion gas immediately after ignition.

Also in this embodiment, fuel supply system is simplified, and the injectors (720) and the fuel distribution pipe (715) are covered and protected with the intake manifold (704).

As described above, with the invention of claim 1, the fuel supply passage is simplified by disposing the centers of in-line cylinders on both ends on a common plane and disposing a fuel supply pipe of the fuel supply device for supplying fuel to the engine parallel to the common plane. When various components related to the engine such as intake and exhaust systems are disposed around the cylinders and each cylinder side wall is provided with an injector, interference between the injectors and the fuel supply system for supplying fuel to the engine is avoided and they are arranged compactly. Fuel supply route to the injectors is also simplified for the compact arrangement of the fuel supply system as a whole.

With the invention of claim 2, injectors are disposed on cylinder side walls of cylinders at least on both ends and each connected directly to the fuel supply pipe, and piping between the fuel supply pipe and the injectors is made unnecessary. As a result, the fuel supply passage is simplified, and fuel is supplied smoothly because of a short length of the fuel supply passage.

With the invention of claim 3, at least two injectors are disposed on each cylinder and each connected directly to the fuel supply pipe, and piping between the fuel supply pipe and the injectors is made unnecessary. As a result, the fuel supply passage is simplified, and fuel is supplied smoothly because of a short length of the fuel supply passage.

## Claims

1. Multiple-cylinder internal combustion engine of a fuel injection type,
wherein each cylinder comprises a combustion chamber formed by a cylinder head (23, 244, 701), a cylinder body, and a piston (26, 254, 703), and
a fuel supply device for supplying fuel to fuel injectors is provided,
**characterized in that**
at least one fuel injector (61, 601, 264, 720) is associated to a side wall (22a, 243a) of each cylinder body,
the longitudinal axes of at least two cylinders define a common plane (P10), and
said fuel supply device comprises a fuel distribution pipe (296, 530, 605, 715) which is arranged substantially parallel to said common plane (P10).

2. Multiple-cylinder internal combustion engine according to claim 1, **characterized in that** said injectors (61, 601, 264, 720) are each directly connected to said fuel distribution pipe (296, 530, 605, 715).

3. Multiple-cylinder internal combustion engine according to claim 1 or 2, **characterized in that** at least two injectors (601) are provided for each cylinder, said injectors being directly connected to the fuel distribution pipe (605).

4. Multiple-cylinder internal combustion engine according to one of claims 1 to 3, **characterized in that** the injector (61, 601, 264, 720) is arranged on the cylinder side wall at an angular position opposite to the exhaust port (44) while main-scavenging ports (41a1) are provided in the cylinder side wall at angular positions between said injector (61) and said exhaust port (44), and a sub-scavenging port (41b1) is arranged below said injector (61).

5. Multiple-cylinder internal combustion engine according to one of claims 1 to 4, **characterized in that** the centers (01) of the cylinders are arranged in a common plan (P10), and the injectors (61, 601, 264, 720) with their longitudinal axis are arranged in or parallel to or tilted relative to second planes (P11) which are perpendicular to said common plane (P10) and pass the center (01) of the respective cylinder, all injectors (61, 601, 264, 720) being parallel to each other.

6. Multiple-cylinder internal combustion engine according to one of claims 1 to 5, **characterized in that** the injectors (61, 601, 264, 720) are adapted to inject a jet (X) directed towards the piston (26) and a jet (Y) directed towards the cylinder head.

7. Multiple-cylinder internal combustion engine according to one of claims 1 to 6, **characterized in that** the injectors (61, 601, 264, 720) are arranged at a position corresponding to a position of the piston in the cylinder at an early stage of the compression stroke.

8. Multiple-cylinder internal combustion engine according to one of claims 5 to 7, **characterized in that** the angles (δ1, δ2) between the jet (X) directed towards the piston and a longitudinal axis (L2) of the injector (61, 601, 264, 720) is larger than the angle (ax) between said axis (L2) and a line connecting the upper edge of an exhaust port (44) and the injection hole through which said jet (X) directed towards the piston is injected.

9. Multiple-cylinder internal combustion engine according to one of claims 1 to 8, **characterized in that** the injector (61) comprises a nozzle (361) having an injection passage (361a) extending therein, a first injection hole (361b) enabling injection towards the cylinder head and a second injection hole (361c) enabling injection towards the piston, both branching off from said injection passage (361a), the diameter of the first injection hole (361b) being smaller than that of the second injection hole (361b).

10. Multiple-cylinder internal combustion engine according to claim 9, **characterized in that** the angle (µ2) between a center line of the first injection hole (361b) and a center line of the injection passage (361a) is larger than the angle (µ1) between the center line of the second injection hole (361c) and the center line of the injection passage (361a).

11. Multiple-cylinder internal combustion engine according to one of claims 6 to 10, **characterized in that** the jet (X) directed towards the piston is injected with a widening angle (δ0) in an asymmetric manner with respect to the cylinder center (01).

12. Multiple-cylinder internal combustion engine according to one of claims 1 to 11, **characterized in that** the injectors (61) extend through a cooling water jacket (51) of the engine.

13. Multiple-cylinder internal combustion engine according to one of claims 1 to 12, **characterized in that** the fuel supply device (60) further comprises a fuel storage section and a fuel pump (64, 65)

14. Method of injecting fuel in an multiple-cylinder internal combustion engine according to one of claims 1 to 13, wherein the injection start timing is determined on the basis of the piston speed, the position of the injector and the injection flow velocity so that an exhaust port (44) is covered by the piston (26) whenever the injection flow reaches the cylinder side wall (22a) opposite the injector.
